# DEMANDE DE BREVET EUROPEEN

(11) **EP 4 474 114 A1**
(43) Date de publication de la demande: **11.12.2024**
(21) Numéro de dépôt: 24180098.6
(22) Date de dépôt: 05.06.2024
(51) Int. Cl.: B25J 15/06

(54) **PRÉHENSEUR PNEUMATIQUE ROBOTISÉ, PROCÉDÉ DE PRÉHENSION ET CIRCUIT PNEUMATIQUE**

(30) Priorité: 08.06.2023 FR 2305810
(71) Demandeur: Exotec Product France, 59170 Croix (FR)
(72) Inventeur: CAGNAC, Bastien, 59290 WASQUEHAL (FR); MOURET, Julien, 59700 MARCQ EN BAROEUL (FR); SIX, Benjamin, 59000 LILLE (FR)
(74) Mandataire: Plasseraud IP

(57) **Abrégé**

Préhenseur pneumatique robotisé (10) comprenant :
- un bras robotisé (11) ;
- un effecteur (12) comprenant au moins un organe de préhension (14) tel qu'une ventouse ou une mousse ; et
- un circuit pneumatique de mise sous vide contrôlée de l'au moins un organe de préhension (14), le circuit pneumatique comprenant :
∘ une source de vide (15) ;
∘ une conduite principale (16) reliant la source de vide (15) à l'organe de préhension (14) ; et
∘ une conduite auxiliaire (18) reliée à la conduite principale en un ou plusieurs noeuds (17), la conduite auxiliaire (18) étant munie d'une vanne (19) configurée pour commuter entre une position fermée (F) dans laquelle la conduite auxiliaire (18) est obturée, et une position ouverte (O) dans laquelle le noeud (17) est fluidiquement relié à l'atmosphère (A).

## Description

### Domaine technique

La présente divulgation relève du domaine de la logistique notamment dans des entrepôts automatisés, et plus particulièrement des opérations de « picking », terme anglosaxon qui désigne l'action de saisir un article pour l'extraire d'un groupe d'articles présents dans un conteneur, et de le déposer dans un autre conteneur spécifique, par exemple pour la préparation de commandes commerciales.

### Technique antérieure

Il est connu de réaliser de telles opérations de préhension par des dispositifs robotisés, notamment pas des bras programmables, en général mobiles selon 5 ou 6 axes, et munis à leur extrémité mobile d'un effecteur doté d'un organe de préhension, comportant par exemple une ventouse et/ou une mousse, permettant d'assurer l'opération de préhension des objets.

Les objets peuvent être de tailles, de formes et de poids différents, voire également de différentes textures de surface.

Pour que l'organe de préhension puisse saisir l'objet, il est en général prévu un circuit pneumatique pouvant comporter une source de vide, telle qu'une pompe, configurée pour créer, au niveau de l'organe de préhension, une dépression nécessaire à la saisie de l'objet. Par exemple, le document EP2150382B1 décrit un circuit pneumatique de préhenseur pneumatique robotisé comprenant une source d'air comprimé qui alimente via une conduite d'alimentation un venturi, lui-même relié à une ventouse par une conduite d'aspiration. Une première vanne contrôle l'alimentation en air du venturi et une deuxième vanne à seuil de pression met la ventouse à la pression atmosphérique lorsque l'alimentation en air comprimé est désactivée. Ainsi, en phase de préhension, la source d'air comprimé est activée, créant dans la conduite d'aspiration, via le venturi, une dépression qui permet à la ventouse de saisir un objet. En phase de relâche, la source d'air comprimé est stoppée, et la deuxième vanne à seuil de pression s'ouvre pour remettre la ventouse à la pression atmosphérique et relâcher l'objet. Un circuit pneumatique similaire est décrit dans le document EP2104640 B1.

Dans un tel système, il est nécessaire de désactiver la pompe pour annuler l'effet de succion à chaque opération de dépose d'objet. Un tel procédé n'est pas souhaitable car le fait de remettre en marche la source de vide de manière successive peut la dégrader prématurément. Il est généralement conseillé de ne pas dépasser une dizaine de mises en marche par heure. Or, les cadences qu'il est nécessaire de tenir, pour une application industrielle de « picking » sont plutôt de l'ordre de 600 préhensions (cycle de saisie et de dépose) par heure. Un système simple de succion n'est donc pas adapté pour les applications de préhension d'un entrepôt automatisé.

Il a donc été nécessaire de développer un moyen permettant de saisir et relâcher un objet tout en conservant la source de vide en état de marche constant.

Un moyen comme une vanne permet d'ouvrir le circuit pneumatique entre la source de vide et l'organe de préhension, et ainsi ponctuellement relier l'organe de préhension à l'atmosphère pour relâcher les objets saisis.

Le document de brevet WO 2019/094382-A1 divulgue notamment l'utilisation d'une vanne 3 voies et 2 positions pour permettre alternativement la saisie et la dépose d'objets avec des cadences adaptées à une utilisation industrielle, tout en gardant la source de vide en état de marche constant.

Cependant, l'intégration au circuit d'une telle vanne reste complexe et son utilisation peut induire des pertes de charge qui dégradent les performances du dispositif.

### Résumé

La présente divulgation vient améliorer la situation en proposant un système de conception simple, qui garantisse une grande durée de vie de la source de vide et qui diminue les pertes de charge en comparaison de la conception décrite ci-avant.

Il est proposé un préhenseur pneumatique robotisé comprenant :
- un bras robotisé ;
- un effecteur disposé à une extrémité mobile du bras robotisé, l'effecteur comprenant au moins un organe de préhension tel qu'une ventouse ou une mousse ; et
- un circuit pneumatique de mise sous vide contrôlée de l'au moins un organe de préhension, le circuit pneumatique comprenant :
   ∘ une source de vide ;
   ∘ une conduite principale reliant la source de vide à l'organe de préhension ; et
   ∘ une conduite auxiliaire reliée à la conduite principale en un ou plusieurs noeuds,
la conduite auxiliaire étant munie d'une vanne configurée pour commuter entre une position fermée dans laquelle la conduite auxiliaire est obturée, et une position ouverte dans laquelle le noeud est fluidiquement relié à l'atmosphère.

Les caractéristiques exposées dans les paragraphes suivants peuvent, optionnellement, être mises en oeuvre, indépendamment les unes des autres ou en combinaison les unes avec les autres :

Selon un perfectionnement, la vanne est une vanne 2 voies 2 positions.

Selon un perfectionnement, le noeud est unique.

Selon un perfectionnement, tout ou partie du circuit pneumatique est intégré au bras robotisé, et donc mobile avec celui-ci.

Selon un perfectionnement, la source de vide est à effet Venturi.

Selon un perfectionnement, la source de vide est une pompe à vide à palettes.

Selon un perfectionnement, la source de vide est une pompe à turbine.

Selon un perfectionnement, la vanne comporte une embouchure ouverte vers l'atmosphère et un dispositif de filtration au niveau de ladite embouchure.

La présente divulgation concerne en outre un procédé comprenant les étapes suivantes :
- Activation de la source de vide ;
- Approche de l'au moins un organe de préhension d'un objet à manipuler ;
- Saisie de l'objet par l'établissement d'une dépression dans l'organe de préhension, obtenue soit par l'activation de la source de vide si la vanne est normalement fermée, soit par la commutation de la vanne vers la position fermée ;
- Déplacement de l'objet par le bras motorisé vers un emplacement souhaité,
- Dépose de l'objet par la remise à l'atmosphère de l'organe de préhension, obtenue par la commutation de la vanne vers la position ouverte.

La présente divulgation concerne également un circuit pneumatique de mise sous vide contrôlée d'un organe de préhension, le circuit comprenant :
- une source de vide ;
- une conduite principale destinée à relier la source de vide à l'organe de préhension ; et
- une conduite auxiliaire reliée à la conduite principale en un ou plusieurs noeud, la conduite auxiliaire étant munie d'une vanne configurée pour commuter entre une position fermée dans laquelle la conduite auxiliaire est obturée, et une position ouverte dans laquelle le noeud est fluidiquement relié à l'atmosphère.

### Brève description des dessins

D'autres caractéristiques, détails et avantages apparaîtront à la lecture de la description détaillée ci-après, et à l'analyse des dessins annexés, sur lesquels :
**Fig. 1**

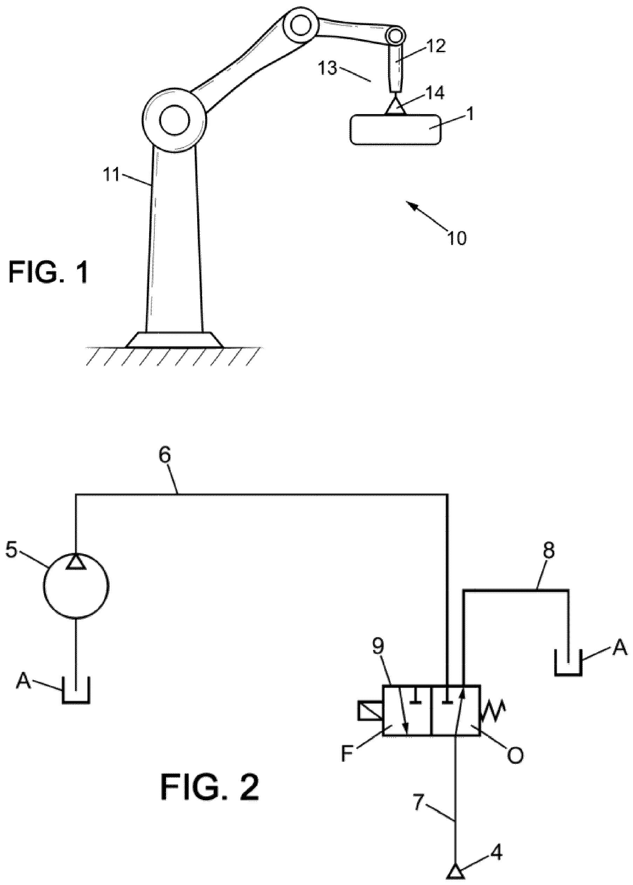

   [Fig. 1] montre un préhenseur pneumatique robotisé selon un mode de réalisation.
**Fig. 2**
   [Fig. 2] montre un schéma d'un circuit pneumatique de l'état de l'art.
**Fig. 3**

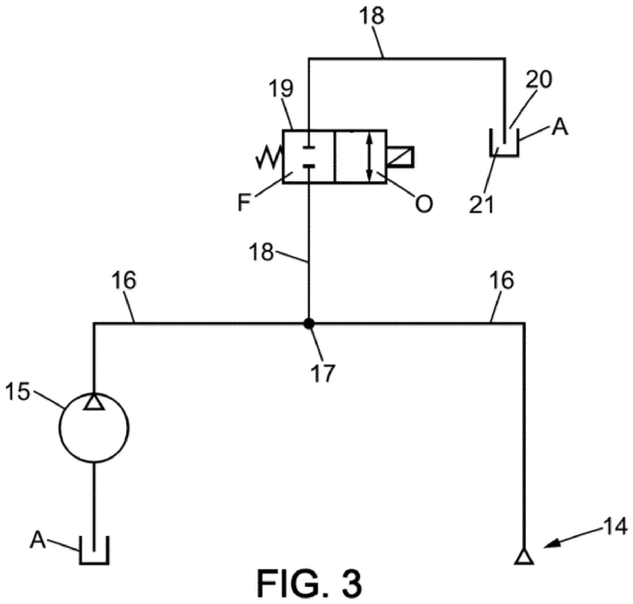

   [Fig. 3] montre un schéma du circuit pneumatique selon un mode de réalisation de la présente divulgation.

### Description des modes de réalisation

La figure 1 montre un préhenseur pneumatique robotisé 10 selon la présente divulgation. Le préhenseur 10 est représenté lors d'une opération de saisie d'un objet 1.

Le préhenseur 10 peut comporter un bras robotisé 11, par exemple un bras robotisé programmable mobile à 360 degrés selon plusieurs axes, notamment selon 5 ou 6 axes. D'autres structures robotiques sont également envisageables, comme par exemple une structure en portique.

Le préhenseur 10 peut comporter un processeur (non représenté) capable d'exécuter un programme qui contient des instructions de commande du préhenseur. Il peut également comprendre une interface homme-machine pour le piloter manuellement.

Le préhenseur peut notamment être doté d'un capteur optique (non représenté), par exemple d'une caméra, pour recueillir des informations sur l'objet à saisir, notamment sa position, sa forme, sa taille, etc...

Le bras robotisé 11 peut comporter une extrémité libre 13, opposée à une extrémité fixée au sol ou à une structure quelconque. Au niveau de cette extrémité libre 13 est agencé un effecteur 12, lequel est muni d'au moins un organe de préhension 4, 14. Il peut être avantageux de munir l'effecteur 12 de plusieurs organes de préhension, notamment pour la saisie d'objet de forme plus complexe, plus volumineux ou plus lourds.

Le préhenseur 10 peut comporter un circuit pneumatique, configuré pour faire circuler un fluide gazeux, par exemple de l'air, et pour permettre la création d'un effort de succion au niveau de l'organe de préhension 4, 14.

Un circuit pneumatique de l'état de la technique va maintenant être décrit en référence à la figure 2.

Un tel circuit connu comporte une première conduite 6, qui permet de relier fluidiquement une source de vide 5 à l'organe de préhension 4 via une vanne 9. La vanne est généralement de type « 3/2 », c'est-à-dire qu'elle distribue le fluide entre trois voies, typiquement une entrée, une sortie et un échappement, et peut commuter entre deux positions : une position fermée F et une position ouverte O (représenté sur la figure 2).

Le circuit comporte en outre une seconde conduite 7 qui relie fluidiquement la sortie de la vanne 9 à l'organe de préhension 4, et comporte une troisième conduite 8 qui relie fluidiquement la vanne 9 à la pression atmosphérique. De manière générale, il peut s'agir d'une conduite ouverte vers l'atmosphère A.

Ainsi, la position fermée F de la vanne 9 permet de relier la première conduite 6 à la deuxième conduite 7, et ainsi de relier fluidiquement la source de vide 5 à l'organe de préhension 4 pour créer une dépression dans l'organe de préhension et ainsi créer l'effort de succion nécessaire à la saisie d'un objet.

A l'inverse, la position ouverte O permet de bloquer la première conduite 6, et permet de relier la seconde conduite 7 à la troisième conduite 8, et ainsi de relier l'organe de préhension 4 à l'atmosphère A. Cela a pour conséquence de remettre l'organe de préhension 4 à la pression atmosphérique et de stopper l'effort de succion pour relâcher l'objet.

Ce mode de réalisation de circuit pneumatique connu permet d'éviter les remises en route fréquentes de la source de vide, qui peut ainsi rester toujours active. Cependant, la vanne « 3/2 » et les trois conduites distinctes restent complexes à intégrer au système du préhenseur.

De plus, ce type de circuit peut induire un grand nombre de restrictions, dues notamment à la complexité géométrique interne de la vanne « 3//2 », qui impliquent une perte de vide pouvant atteindre 20%, au niveau de l'organe de préhension, par rapport au niveau de vide en sortie de la source de vide 5. Cela dégrade les performances du système notamment dans des opérations de saisie d'objets à surface poreuse ou présentant une masse élevée.

Par ailleurs, dans un tel circuit connu, quand la vanne est en position fermée F, la source de vide continue à « aspirer » contre l'entrée de la vanne qui est bloquée. Cela n'est pas souhaitable pour optimiser les durées de vie de la source de vide 5 et de la vanne 9, qui peuvent voir leurs composants internes se dégrader prématurément. Cela peut avoir également pour effet d'accroitre inutilement la consommation en énergie de la source de vide.

Un mode de réalisation de la présente divulgation va maintenant être décrit en référence à la figure 3.

Le circuit pneumatique du préhenseur pneumatique 10, selon un mode de réalisation de la présente divulgation, peut comporter une conduite principale 16 reliant la source de vide 15 à l'organe de préhension 14, et une conduite auxiliaire 18 reliée à la conduite principale en au moins un noeud 17.

La source de vide 15, peut-être du type à effet Venturi ou être constitué d'une pompe à vide à palette ou d'une pompe à vide à turbine. Alternativement, plusieurs sources de vide d'un même type ou de types différents peuvent être combinées.

L'au moins un noeud 17 permet de relier fluidiquement la conduite auxiliaire à la conduite principale en un point intermédiaire entre la source de vide 15 et l'organe de préhension 14. Un noeud au sens de la présente divulgation est donc une jonction à au moins trois orifices permettant de relier au moins deux conduites.

La conduite auxiliaire 18 peut être munie d'une vanne 19 qui peut être configurée pour alternativement fermer et ouvrir le circuit vers l'atmosphère. Lorsque cette vanne 19 est fermée, la dépression créée par la source de vide atteint l'organe de préhension 14 : il est ainsi possible de saisir un objet. Lorsque la vanne 19 est ouverte, le noeud 17 est mis à l'atmosphère et la source de vide 15, toujours en fonctionnement, ne crée plus de dépression dans la conduite principale 16 : l'objet saisi est relâché.

Dans un mode de réalisation préféré, le circuit comporte un unique noeud. Le fluide peut alors circuler librement dans trois branches, composées des deux conduites principale et auxiliaires, qui se rejoignent au noeud 17, tel que représentées à la figure 3.

Dans un mode de réalisation préféré, la vanne est de type « 2/2 », et permet de relier deux voies, une voie d'entrée et une voie de sortie, et peut commuter entre deux positions : une position fermée F et une position ouverte O. Ainsi, le circuit gagne grandement en simplicité de mise en oeuvre ce qui apporte à la fois un gain économique, mais aussi un effet bénéfique de limitation des pertes de charges dans la vanne, cette dernière étant moins complexe et présentant moins de restrictions que les vannes « 3/2 » de l'état de l'art.

Avec cette configuration, la position fermée F de la vanne 19 permet d'obturer la liaison de la conduite auxiliaire avec l'atmosphère A, et ainsi de relier fluidiquement la source de vide 15 à l'organe de préhension 14 pour créer une dépression dans l'organe de préhension et ainsi créer l'effort de succion nécessaire à la saisie d'un objet.

A l'inverse, la position ouverte O permet de relier la conduite principale 16 à la conduite auxiliaire 18, et ainsi de relier l'organe de préhension 14, et la source de vide 15, à l'atmosphère A. Cela a pour conséquence de remettre l'organe de préhension 14 à la pression atmosphérique et de stopper l'effort de succion pour relâcher l'objet.

Lorsque la vanne 19 est en position ouverte O, la source de vide 15 est donc également reliée à l'atmosphère A par une embouchure 20 de la vanne, ou de la conduite auxiliaire. Le système étant configuré pour que la source de vide 15 reste en état de marche, il en résulte une aspiration ininterrompue au niveau de l'embouchure par la source de vide 15. Le préhenseur pneumatique 10 peut donc comprendre, au niveau de l'embouchure 20 de la vanne 19, un dispositif de filtration 21, telle que par exemple une grille, pour empêcher l'aspiration de matière pouvant endommager les composants internes du circuit, notamment de la vanne 19 et/ou de la source de vide 15.

Tout ou partie du circuit pneumatique peut être intégré au bras robotisé, et donc mobile avec celui-ci.

La présente divulgation concerne également un procédé de préhension d'objets mis en oeuvre par un préhenseur pneumatique 10 tel que précédemment décrit, le procédé comportant les étapes suivantes :
- Activation de la source de vide 15 ;
- Approche de l'au moins un organe de préhension d'un objet 1 à manipuler ;
- Saisie de l'objet 1 par l'établissement d'une dépression dans l'organe de préhension 14, obtenue soit par l'activation de la source à vide si la vanne est normalement fermée, soit par la commutation de la vanne 19 vers la position fermée si celle-ci est normalement ouverte ;
- Déplacement de l'objet 1 par le bras motorisé 11 vers un emplacement souhaité ; et
- Dépose de l'objet 1 par la remise à l'atmosphère de l'organe de préhension 14, obtenue par la commutation de la vanne 19 vers la position ouverte O.

La première étape d'activation n'est nécessaire que si la source de vide a été désactivée pour une raison quelconque, par exemple en fin de cycle de préhension précédent, ou encore par exemple lors d'un arrêt d'urgence, ou encore s'il s'agit du premier cycle de préhension. De manière générale, la source de vide 15 est activée de façon constante.

La vanne 19 peut être normalement ouverte ou normalement fermée. Dans un mode de réalisation préféré, elle est normalement fermée, ce qui implique que la vanne 19 n'est commandée que pour la commutation vers la position ouverte et la dépose de l'objet 1. Mais il est également possible de prévoir que la vanne soit normalement ouverte, ainsi la vanne sera commandée pour la saisie de l'objet. La vanne peut alternativement être à double effet et donc sans position préférentielle par défaut.

### Application industrielle

Les présentes solutions techniques peuvent trouver à s'appliquer notamment dans le domaine de la logistique des entrepôts automatisés, et plus particulièrement lors d'opérations de « picking », par exemple pour la préparation de commandes commerciales.

### Liste des signes de référence

- 1 : objet
- 4, 14 : organe de préhension
- 5, 15 : source de vide
- 6 : première conduite
- 7 : seconde conduite
- 8 : troisième conduite
- 9, 19 : vanne
- 10 : préhenseur pneumatique robotisé
- 11 : bras robotisé
- 12 : effecteur
- 13 : extrémité libre
- 14 : organe de préhension
- 15 : source de vide
- 16 : conduite principale
- 17 : noeud
- 18 : conduite auxiliaire
- 19 : vanne
- 20 : embouchure
- 21 : dispositif de filtration
- A : atmosphère
- F : position fermée
- O : position ouverte

## Revendications

1. Préhenseur pneumatique robotisé (10) comprenant :
- un bras robotisé (11) ;
- un effecteur (12) disposé à une extrémité mobile du bras robotisé (11), l'effecteur (12) comprenant au moins un organe de préhension (14) tel qu'une ventouse ou une mousse ; et
- un circuit pneumatique de mise sous vide contrôlée de l'au moins un organe de préhension (14), le circuit pneumatique comprenant :
∘ une source de vide (15) configurée pour fournir une aspiration ininterrompue ;
∘ une conduite principale (16) reliant la source de vide (15) à l'organe de préhension (14) ; et
∘ une conduite auxiliaire (18) reliée à la conduite principale en un ou plusieurs noeuds (17), la conduite auxiliaire (18) étant munie d'une vanne (19) configurée pour commuter entre une position fermée (F) dans laquelle la conduite auxiliaire (18) est obturée, et une position ouverte (O) dans laquelle le noeud (17) est fluidiquement relié à l'atmosphère (A), la position fermée (F) de la vanne (19) permettant d'obturer la liaison de la conduite auxiliaire (18) avec l'atmosphère, et ainsi de relier fluidiquement la source de vide (15) à l'organe de préhension (14) pour créer une dépression dans l'organe de préhension (14) et ainsi créer l'effort de succion nécessaire à la saisie d'un objet.

2. Préhenseur (10) selon la revendication 1, dans lequel la vanne (19) est une vanne 2 voies 2 positions.

3. Préhenseur (10) selon la revendication 1 ou 2, dans lequel le noeud (17) est unique.

4. Préhenseur (10) selon l'une des revendications précédentes, dans lequel tout ou partie du circuit pneumatique est intégré au bras robotisé, et donc mobile avec celui-ci.

5. Préhenseur (10) selon l'une quelconque des revendications 1 à 4 dans lequel la source de vide (15) est à effet Venturi.

6. Préhenseur (10) selon l'une quelconque des revendications 1 à 4 dans lequel la source de vide (15) est une pompe à vide à palettes.

7. Préhenseur (10) selon l'une quelconque des revendications 1 à 4 dans lequel la source de vide (15) est une pompe à turbine.

8. Préhenseur (10) selon l'une quelconques des revendications précédentes, dans lequel la vanne comporte une embouchure (20) ouverte vers l'atmosphère (A) et un dispositif de filtration (21) au niveau de ladite embouchure (20).

9. Procédé de préhension d'objets mis en oeuvre par un préhenseur (10) selon l'une quelconque des revendications précédentes, le procédé comprenant les étapes suivantes :
- Activation de la source de vide (15) ;
- Approche de l'au moins un organe de préhension d'un objet (1) à manipuler ;
- Saisie de l'objet (1) par l'établissement d'une dépression dans l'organe de préhension (14), obtenue soit par l'activation de la source de vide si la vanne est normalement fermée, soit par la commutation de la vanne (19) vers la position fermée (F) ;
- Déplacement de l'objet (1) par le bras motorisé (11) vers un emplacement souhaité,
- Dépose de l'objet (1) par la remise à l'atmosphère de l'organe de préhension (14), obtenue par la commutation de la vanne (19) vers la position ouverte (O), alors que la source de vide (15) est maintenue active.

10. Circuit pneumatique de mise sous vide contrôlée d'un organe de préhension, le circuit comprenant :
- une source de vide (15) configurée pour fournir une aspiration ininterrompue ;
- une conduite principale (16) destinée à relier la source de vide (15) à l'organe de préhension (14) ; et
- une conduite auxiliaire (18) reliée à la conduite principale en un ou plusieurs noeud (17),
la conduite auxiliaire (18) étant munie d'une vanne (19) configurée pour commuter entre une position fermée (F) dans laquelle la conduite auxiliaire est obturée, et une position ouverte (O) dans laquelle le noeud (17) est fluidiquement relié à l'atmosphère (A), la position fermée (F) de la vanne (19) permettant d'obturer la liaison de la conduite auxiliaire (18) avec l'atmosphère, et ainsi de relier fluidiquement la source de vide (15) à l'organe de préhension (14) pour créer une dépression dans l'organe de préhension (14) et ainsi créer l'effort de succion nécessaire à la saisie d'un objet.
